(19) Europäisches Patentamt
European Patent Office
Office européen des brevets

(11) **EP 0 722 213 A2**

(12) **EUROPÄISCHE PATENTANMELDUNG**

(43) Veröffentlichungstag:
17.07.1996 Patentblatt 1996/29

(51) Int. Cl.⁶: **H02N 1/08**

(21) Anmeldenummer: 95118687.3

(22) Anmeldetag: 28.11.1995

(84) Benannte Vertragsstaaten:
AT BE CH DE DK ES FR GB GR IE IT LI LU MC NL PT SE

(30) Priorität: 11.01.1995 DE 19500564

(71) Anmelder: **Parras, Karl-Heinz**
**D-91126 Schwabach (DE)**

(72) Erfinder: **Parras, Karl-Heinz**
**D-91126 Schwabach (DE)**

Bemerkungen:
Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 3.).

(54) **Elektrostatischer Generator**

(57)  Die Erfindung betrifft einen Elektrostatischen Generator mit mindestens einer Rotor-Elektrode (A) oder einem Rotorelektroden-System und mindestens zwei Stator-Elektroden (B,C) oder Statorelektroden-Systemen, bei dem sich die Kapazitäten zwischen Rotor-Elektrode und Stator-Elektroden bzw. zwischen Rotor-Elektrodensystem und Stator-Elektrodensystemen in Abhängigkeit vom Rotorwinkel zwischen einem Wert nahe O und einem Maximalwert gegenläufig zyklisch ändern.

Die Rotor-Elektrode (A) bzw. das Rotorelektroden-System ist über einen in der regel mitrotierenden Kondensator (C4) mit der Rotorachse und dadurch mit dem gemeinsamen Massepotential der gesamten Anordnung verbunden. Die Stator-Elektroden (B,C) bzw. die Statoelektroden-Systeme sind über je einem Kondensator (C3,C5) mit dem gemeinsamen Massepotential der Anordnung verbunden.

Zur Verbesserung der Ladung und des Wirkungsgrades des Generators erfolgt die Energieentnahme an den Stator-Kondensatoren (C3,C5) bzw. den Stator-Elektroden (B,C) nur bei definierten Winkelpositionen des Rotors, an denen sich das elektrostatische Engergieniveau der Rotorelektrode bzw. des Rotorelektroden-Systems in seinem Minimum befindet und die Kapazität zwischen betreffender Stator-Elektode bzw. betreffendem Statorelektroden-System und Rotor-Elektrode bzw. Rotorelektroden-System ebenfalls ihren minimalen Wert erreicht.

Ausserdem werden mittels geeigneter Schaltelemente jeweils alternierend die Stator-Kondensatoren (C3,C5) während definierter Bereiche der Rotorposition für die influenzierten Ladungen elektrisch leitend überbrückt.

Fig. 1

**Beschreibung**

Die beigefügten 9 Skizzen verdeutlichen den technischen Sachverhalt der Erfindung. Es folgt die Kennzeichnung der Figuren:

Fig. 1 zeigt die schematische Darstellung (Schnitt) der Funktionselemente des elektrostatischen Generators sowie die Schaltung der zugehörigen Bauelemente.
Fig. 2 stellt den idealisierten Kapazitätsverlauf zwischen der Rotorelektrode und den Stator-Elektroden im Winkelbereich von 0 bis $\pi$ dar.
Fig. 3 zeigt die Schließzeiten der Schalter S1 bis S4 in Abhängigkeit vom Rotorwinkel.
Fig. 4 zeigt eine Variante der Fig. 1, bei der die Schalterfunktionen S1 und S2 durch Dioden D3 und D5 ersetzt sind.
Fig. 5 zeigt das elektrische Ersatz-Schaltbild der Anordnung für den Rotorwinkelbereich 0 bis $\pi$.
Fig. 6 stellt den Verlauf des zwischen der Rotor- und den Stator-Elektroden gespeicherten elektrischen Energieinhaltes im Drehwinkelbereich zwischen 0 und $\pi$ dar.
Fig. 7 zeigt den am Rotor angreifenden Drehmomentverlauf im Drehwinkelbereich zwischen 0 und $\pi$.
Fig. 8 verdeutlicht den Vorgang des Regenerierens der Rotorladung und zeigt die dazu verwendeten Bauelemente.
Fig. 9 ist das elektrische Ersatzschaltbild für den in der vorangehenden Fig. 8. dargestellten Regenerations-Vorgang der Rotorladung.

## Anwendungsbereich der Erfindung

Elektrostatische Generatoren verwenden das Influenzprinzip, um elektrische Ladungen entgegengesetzter Polarität zu trennen. Sie werden deshalb auch häufig als Influenzmaschinen bezeichnet. Bisweilen wird ebenfalls der Begriff Kondensatormaschine verwendet. Nach der Ladungstrennung durch Influenz werden üblicherweise bewegliche, sich voneinander entfernende Elektrodenanordnungen (z.B. Rotorflächen oder Bänder) verwendet, um die separierten Ladungen gegen ein Potentialgefälle zu transportieren und sehr hohe Spannungen zu erreichen.
Bekannt wurden die Maschinen von Toepler und Holz (Annalen der Physik und Chemie, 1865, Band 125 und 126) sowie der Wimshurst-Generator (Elektrot. Ztschr. 5, 1884). Eine modernere Ausführungsform eines Bandgenerators ist auch heute noch unter dem Namen "van de Graaff-Generator" im Gebrauch (entwickelt 1931).
Aus der amerikanischen Patentliteratur sind diverse Variationen und unterschiedliche Ausgestaltungen dieses Grundprinzips bekannt ( 2,522,106 / 2,540,327 / 2,610,994 / 2,644,903 / 2,739,248 / 2,756,352 / 3,013,201 / 3,094,653 / 4,127,804 / 4,595,852 / 4,897,592 ).
Bei allen bisherigen Anordnungen zeigen sich Nachteile, die im Wesentlichen auf 4 Ursachen beruhen:

a) Das aufzubringende mechanische Drehmoment hängt ab von der Zunahme des elektrostatischen Energieinhalts der Rotoranordnung bezogen auf den Stator bzw. die Umgebung der Maschine. Es ist ungünstig, die Rotorelektroden in dem Augenblick zu entladen, in dem sich der Rotor auf einem sehr hohen oder dem maximalen Energieniveau befindet. Die vorliegende Erfindung vermeidet dies, indem die Ladung der Rotoranordnung während des Betriebs immer unberührt bleibt und die geschaltete Energieentnahme nur dann erfolgt, wenn der Rotor auf seinem niedrigen Energieniveau ist.
b) Wenn die influenzierten Ladungen direkt und kontinuierlich über den Verbraucher abgeleitet werden, ergibt sich ein geringer Wirkungsgrad. Besser ist es, die Ladungen in einem Kondensator zunächst bis zu einem höheren Energieniveau zu akkumulieren, und dann die Energie während definierter Zeitintervalle zu entnehmen.
In der vorliegenden Erfindung sind dazu zwei Kapazitäten vorgesehen, die alternierend durch einen Influenz-Vorgang geladen und zum Zeitpunkt ihres größten Energieinhalts definiert über den Verbraucher-Stromkreis entladen werden.
c) Das Problem, die influenzierende Ladung während des Betriebes aufrecht zu erhalten bzw. bei Ladungsverlusten durch Leckstrom oder Korona-Entladung diese wieder zu regenerieren, ist bisher nur unzureichend gelöst bzw. mit zu großem Aufwand verbunden. Erfindungsgemäß wird diese Aufgabe bewältigt, indem dazu ebenfalls ein (diesmal in umgekehrter Richtung ablaufender) Influenz-Vorgang die Rotor-Ladung wieder regeneriert.
Das Maß für diese Ladungs-Auffrischung ist über bestimmte Kapazitätsverhältnisse präzise steuerbar.
d) Üblicherweise ist bei elektrostatischen Generatoren die Kontaktierung der bewegten Rotor-Elektroden über Schleifkontakte notwendig (mindestens zum Regenerieren der Rotor-Ladung). Dies ist mit mechanischen Reibungsverlusten und Verschleiß verbunden, der sich sehr negativ auf die Betriebszuverlässigkeit auswirkt.
Das zweite Ausführungsbeispiel der vorliegenden Erfindung macht (abgesehen von der Erdung der Rotorachse) jede galvanische Kontaktierung von Rotor-Elementen überflüssig.

## Funktionsbeschreibung der Erfindung

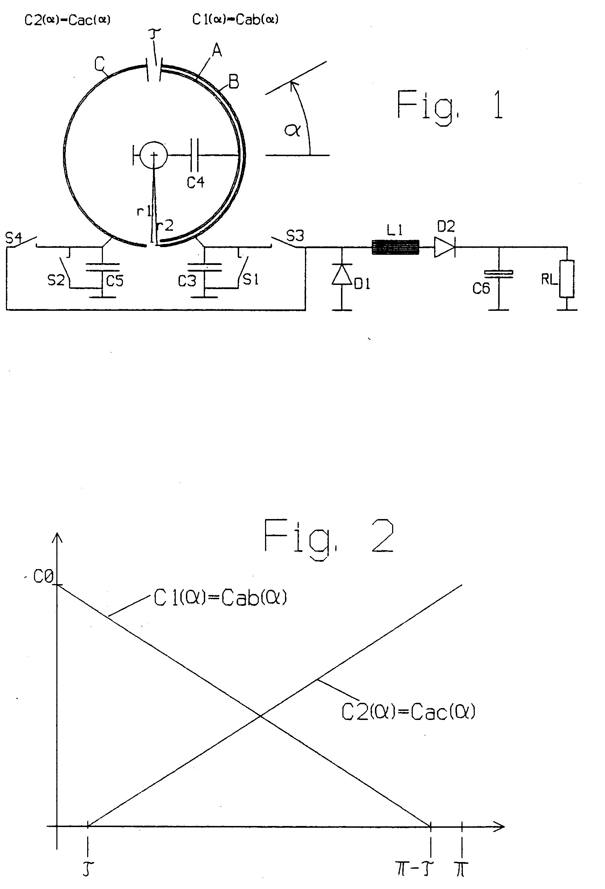

Die erfindungsgemäße Funktionsweise des Generators läßt sich anschaulich mittels der Fig. 1 beschreiben:
B und C sind feststehende Stator-Elektroden in Form eines Zylinder-Abschnittes, die sich jeweils über einen Winkelbereich von $(\pi-\tau)$ erstrecken. Der Winkelbereich $\tau$ muß hinreichend groß sein, um die Isolation der beiden Stator-Elemente B und C auch bei hoher Betriebsspannung sicherzustellen.

B bzw. C sind elektrisch mit den Kondensatoren C3 bzw. C5 sowie den Schaltern S1, S3 und S2, S4 in der dargestellten Weise verbunden. Die zweiten Anschlüsse der Kondensatoren C3 und C5 liegen auf dem gemeinsamen Massepotential. Die Kondensatoren C3 und C5 müssen nicht als diskrete Bauelemente vorhanden sein sondern können auch als konstruktiv definierte Kapazitäten zwischen den äußeren Statorflächen und einer auf Massepotential liegenden leitenden Gehäusewand realisiert werden.

Das ebenfalls zylindrisch ausgebildete Rotorelement A ist drehbar und elektrisch isoliert auf einer Achse gelagert, über die der gesamte Rotor angetrieben werden kann.

Diese mechanische Konstruktion ist in Fig. 1 nicht eingezeichnet, da sie für die Funktionsbeschreibung unerheblich ist. Die Rotorachse ist mit dem Masse-potential verbunden.

Zwischen dem Rotorelement A und der Rotorachse befindet sich der Kondensator C4, der gemeinsam mit dem Rotor umläuft. Dieser Kondensator C4 muß nicht als diskretes Bauelement vorhanden sein sondern kann auch durch die konstruktiv definierte Kapazität zwischen Rotorachse und der inneren Fläche des Rotorelements realisiert sein. Alle Elemente A,B und C haben in achsialer Richtung die gleiche Abmessung. Der Abstand der Rotor- und Statorplatten ergibt sich aus der Differenz der beiden Radien r2 und r1.

In der gezeichneten Stellung ($\alpha=0$) bildet A mit B einen Kondensator mit der Kapazität C0. Die Größe von C0 läßt sich allein aus den geometrischen Abmessungen bestimmen, wie in allen einschlägigen Lehrbüchern nachzulesen ist.

Diese Kapazität Cab = C1($\alpha$) ändert sich mit dem Rotorwinkel $\alpha$. Wird der Rotorwinkel größer als $\tau$, so tritt auch eine Kapazität Cac = C2($\alpha$) zwischen A und C in Erscheinung, die vorher vernachlässigbar klein war. Der näherungsweise Verlauf dieser 2 Kapazitäten ist in Fig. 2 für den gesamten Bereich zwischen 0 und $\pi$ grafisch dargestellt.

Es ist nicht zwingend erforderlich, daß sich die Rotor/Stator- Kapazitäten -wie im beschriebenen Beispiellinear mit dem Rotorwinkel ändern. Andere Kapazitäts-Verläufe sind prinzipiell ebenfalls geeignet.

Für die Funktionsweise ist auch die Ausführungsform dieser Rotor/Stator-Kapazitäten nicht wesentlich. Lediglich aus Gründen der übersichtlichen Darstellbarkeit wurden in Fig. 1 zylindrische Elemente gewählt.

Um größere Kapazitätswerte zu erhalten, werden in realen Ausführungen vorteilhaft ineinandergreifende Plattenpakete verwendet.

Ebenso ist eine Segmentierung der Kondensator-Elemente in kleinere Winkelbereiche sehr sinnvoll, weil sich damit für eine vorgegebene Drehzahl eine größere Leistung erzielen läßt. Bei einer Aufteilung der Rotor/Stator-Kondensatoren in n Segmente wird der weiter unten im Detail beschriebene Lade/Entlade-Zyklus 2n-mal während einer vollen Rotor-Umdrehung durchlaufen. Nur aus Gründen der Übersichtlichkeit sind im beschriebenen Beispiel die Rotor/Stator-Kondensatoren nicht segmentiert, d.h. n nimmt hier den kleinstmöglichen Wert "1" ein.

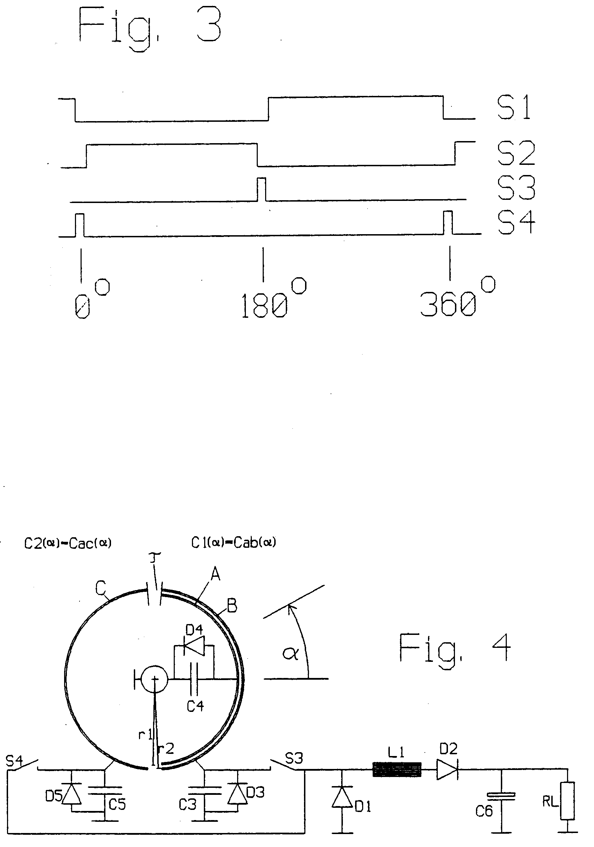

In Fig. 3 sind die Schließzeiten der Schalter S1 bis S4 in Abhängigkeit vom Rotorwinkel dargestellt. Im Bereich von 0 bis $\pi$ ist S1 geöffnet und S2 geschlossen, im Bereich von $\pi$ bis $2\pi$ ist S1 geschlossen und S2 geöffnet. Schalter S1 bzw. Schalter S2 wird nur dann geschlossen, wenn C3 bzw. C5 entladen ist. Eine dafür im praktischen Betrieb sinnvolle Überwachungsschaltung ist in den Skizzen nicht dargestellt, weil dies für das Verständnis der Funktionsweise nicht relevant ist.

S3 wird jeweils in der Winkelposition $\pi$, S4 in der Position 0 bzw. $2\pi$ kurzzeitig geschlossen, damit der Energieinhalt von C3 bzw. C5 über L1 und D2 auf C6 und den Lastwiderstand RL übertragen werden kann.

In der ansonsten mit Fig. 1 identischen Fig. 4 sind die Schalter S1 und S2 durch die Dioden D3 und D5 ersetzt. Die in Fig. 4 ebenfalls dargestellte Diode D4 dient der Regenerierung der Rotorladung, wie weiter unten noch beschrieben wird.

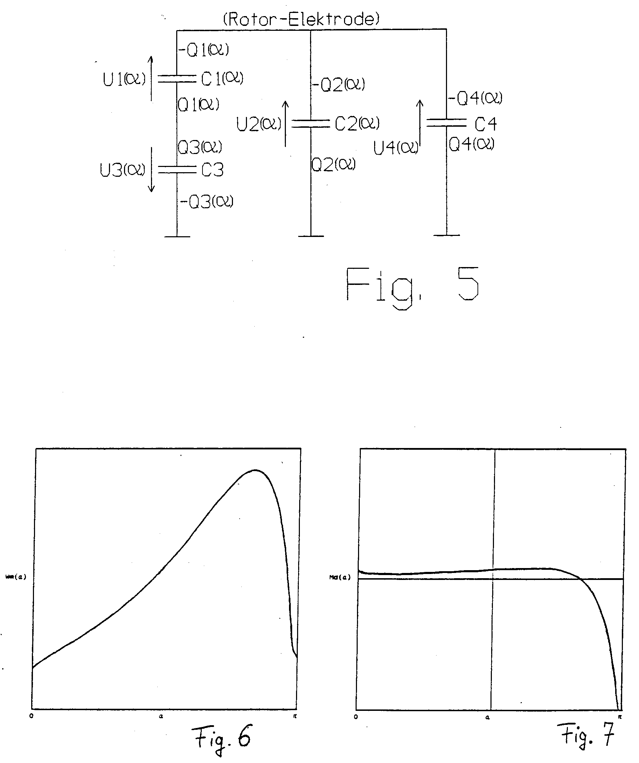

Das elektrische Ersatzschaltbild der Anordnung ohne die Anpassungselemente und den Lastwiderstand ist in Fig. 5 dargestellt. Die Schaltung gilt für den Rotorwinkel-Bereich zwischen 0 und $\pi$, d.h. Schalter S1 ist offen, Schalter S2 ist geschlossen, S3 und S4 sind geöffnet. Der Kondensator C3 sei unmittelbar vorher entladen worden, so daß die Spannung U3 zum Startzeitpunkt ($\alpha=0$) identisch 0 ist. Die Spannung zwischen Rotorelektrode A und Masse betrage -U0 in der Rotorposition $\alpha=0$. Dies bedeutet, daß sich auf der Rotorelektrode A und der damit verbundenen Kondensatorelektrode von C4 eine durch die Kapazitäten C0 und C4 definierte Ladungsmenge -Q0 befindet. Diese Ladungsmenge -Q0 bleibt während des gesamten Betriebs konstant (wenn man von möglichen Ladungsverlusten durch Leckströme oder Korona-Entladungen absieht), da in keiner Betriebsphase eine galvanische Verbindung zwischen A und anderen Schaltungsteilen besteht.

Die Kondensatoren werden zunächst als ideal angenommen, Verluste durch Leckströme nicht berücksichtigt. Die Ladungen auf der Rotor-Elektrode und den Stator-Flächen seien frei und praktisch verlustlos beweglich.

Mit diesen Ausgangsbedingungen gilt nach den allgemeinen Regeln der Netzwerkanalyse für die Spannungsverläufe U1($\alpha$), U2($\alpha$) und U3($\alpha$) im Bereich von 0 bis $\pi$:

$$U1(\alpha) = \frac{Q0{*}C3 + QR{*}(C2(\alpha)+C4)}{C3{*}(C1(\alpha)+C2(\alpha)+C4) + C1(\alpha){*}(C2(\alpha)+C4)}$$

$$U2(\alpha) = \frac{Q0 - C1(\alpha) \,{*}\, U1(\alpha)}{C4 + C2(\alpha)}$$

$$U3(\alpha) = \frac{QR - C1(\alpha) \,{*}\, U1(\alpha)}{C3}$$

mit

$$QR = Q0 \,{*}\, \frac{C0}{C0 + C4}$$

Das aufzubringende mechanische Drehmoment wird bestimmt vom Verlauf der im elektrischen Feld zwischen Rotor- und Stator-Elektroden vorhandenen Energie, d.h. der Summe der in C1($\alpha$) und C2($\alpha$) gespeicherten elektrostatischen Feldenergie.

Für die Summe dieser Feld-Energie gilt:

$$Wm(\alpha) = 0.5 \,{*}\, C1(\alpha) \,{*}\, U1(\alpha)^2 + 0.5 \,{*}\, C2(\alpha) \,{*}\, U2(\alpha)^2$$

Das mechanische Drehmoment entspricht der 1. Ableitung dieser Funktion nach $\alpha$.

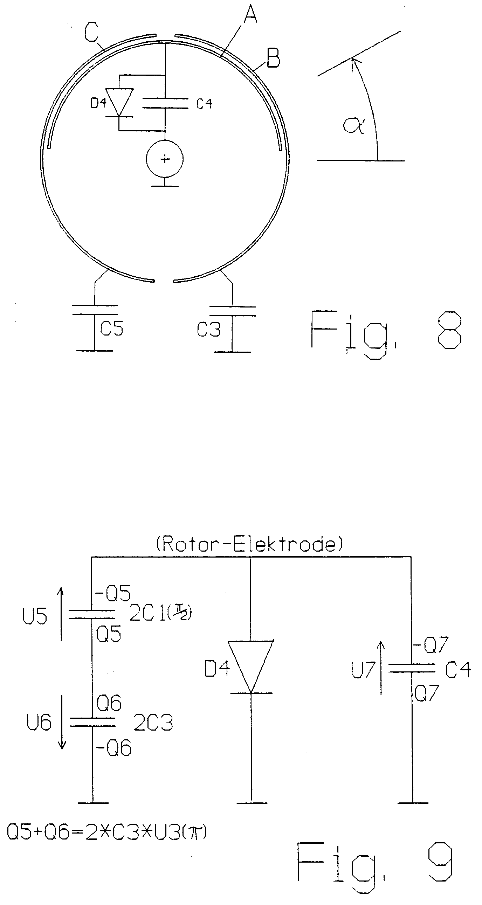

In Fig. 6 ist der Verlauf dieser Rotor-Feldenergie qualitativ dargestellt. Fig. 7 zeigt das zugehörige Drehmoment als Funktion des Rotorwinkels.

Für den Energieinhalt des Kondensators C3 gilt:

$$W3(\alpha) = 0.5 \,{*}\, C3 \,{*}\, U3(\alpha)^2$$

Bei Erreichen der Winkelposition $\pi$ wird in sehr kurzer Zeit (im Vergleich zur Umlaufzeit des Rotors) der Kondensator C3 entladen, indem der Schalter S3 geschlossen wird. Über die Spule L1 und die Diode D2 wird -abgesehen von unvermeidlichen ohmschen Verlusten- die gesamte Energie W3($\pi$) auf den Kondensator C6 und den Lastwiderstand RL übertragen. C6 dient als Glättungs-Kondensator und sollte einen möglichst großen Kapazitätswert besitzen. Die in Fig. 1 und Fig. 4 dargestellte Ladeschaltung erlaubt mit wenig Aufwand eine Anpassung zwischen dem sehr hohen Spannungniveau an C3 und dem niedrigen Spannungsniveau des Verbrauchers RL. Die Diode D1 übernimmt den abklingenden Spulenstrom, wenn die Spannung an C3 auf 0 abgesunken ist.

Diode D2 verhindert ein Zurückfließen der Energie, falls S3 zu lange geschlossen bleibt.

Die Spannung am Verbraucher-Widerstand RL kann ggfs. noch durch eine Zenerdiode auf einen maximal zulässigen Wert begrenzt werden. Aus Gründen der Übersicht ist diese in den Skizzen nicht eingezeichnet.

Die Größe von L1 ist unkritisch, solange die Periodendauer des resultierenden Schwingkreises (aus L1 und C3) sehr klein gegenüber der Umlaufdauer des Rotors bleibt.

Nach diesem Entladevorgang sind -abgesehen von der Vertauschung der Stator-Elektroden B und C- exakt die Ausgangsbedingungen wieder eingenommen, die beim Rotorwinkel $\alpha$=0 herrschten:

Die Spannung am Rotor hat wieder den Wert -U0, auf dem Rotor und dem Kondensator C4 befindet sich immer noch die Summenladung -Q0. Die Rotor/Stator-Kapazität (jetzt Cac) ist während der Rotorbewegung durch Influenz von positiven Ladungen auf die Statorelektrode C über den geschlossenen Schalter S2 (bzw. Diode D5) ebenfalls auf die Spannung -U0 aufgeladen worden.

Es kann der oben beschriebene Vorgang mit vertauschten Statorelektroden für den Winkelbereich $\pi$ bis 2$\pi$ völlig identisch erneut ablaufen.

Die physikalische Realisierung der Schalterfunktionen S1 und S2 kann in technischer Hinsicht sehr vorteilhaft auch durch geeignete Dioden D3 bzw. D5 erfolgen (siehe Fig. 4), die während des Influenzvorganges positive Ladungen zur Statorelektrode passieren lassen.

Bei niedrigeren Betriebsspannungen können im einfachsten Fall die Schalter S1 bis S4 aus mit dem Rotor umlaufenden Kommutator-Kontakten bestehen, die im vorbestimmten Winkelbereich geschlossen sind.

Bei sehr hohen Betriebsspannungen werden S3 und S4 vorteilhaft jeweils durch eine definierte Funkenstrecke in Luft -oder besser unter Schutzgas- realisiert.

Eine dritte Möglichkeit besteht in der Verwendung von geeigneten Halbleiter-Schaltern, die für die maximal auftretende Spannung ausgelegt und ggfs. mit einer geeigneten Schutzschaltung gegen "Durchschlagen" bei zu hoher Spannung gesichert sind.

Aus der vorangegangenen Beschreibung ist ersichtlich, daß die Funktionsweise des Generators nicht verändert wird, wenn die Polung der Anordnung umgekehrt wird, d.h. sich auf der Rotorelektrode positive Ladungen befinden und die Dioden D1 bis D5 entgegengesetzt orientiert sind.

Wenn Rotor- und Statorelektroden einschließlich der Rotorachse in einem hermetisch dichten, evakuierten Gehäuse untergebracht werden, kann man sehr hohe Betriebsspannungen anwenden, da dann Korona-Entladungen und Spannungüberschläge durch zu hohe Luftfeuchtigkeit unter Kontrolle gebracht werden können. Der Rotor wird in diesem Fall vorzugsweise durch die Gehäusewand mittels einer geeigneten Magnet-Kupplung angetrieben, um Dichtungsprobleme zu vermeiden.

Die für den Influenz-Vorgang notwendige Ladungsmenge -Q0 auf C4 und der Rotorelektrode A muß während des Betriebes aufrechterhalten werden.

Eine Möglichkeit zur Lösung dieses Problems besteht in der Verwendung eines Elektrets auf der Rotoroberfläche, in dem ein ausreichender Ladungsüberschuß dauerhaft bestehen bleibt. Die nachfolgend beschriebenen Maßnahmen zur Kontrolle und Regenerierung der Rotorladung erübrigen sich dann, Kondensator C4 wird überflüssig.

Wenn die Rotorladung durch Leckstrom oder sporadische Korona-Entladung abnimmt, wird die Regenerierung dieser Ladung -Q0 notwendig. Dies kann durch einen speziellen Spannungsinverter erfolgen, der aus den Spannungen an C3 bzw. C5 eine nach Größe und Polarität dazu geeignete Ladespannung erzeugt, mit der die Ladungsverluste auf der Rotorelektrode wieder ausgeglichen werden.

Ebenso ist es eine praktikable, wenn auch aufwendigere Lösung, einen zweiten, identischen Influenz-Generator mit umgekehrter Polarität auf derselben Rotorachse zu betreiben. Die Ladungen auf den Rotoren können dann wechselweise mittels der vom jeweils anderen Generator erzeugten Spannung vorzeichenrichtig regeneriert werden.

Die erfindungsgemäße, günstigere Möglichkeit zur Regenerierung der Ladung -Q0 soll anhand der Fig. 8 und Fig. 9 beschrieben werden. Die Ladungsregeneration erfolgt hierbei ebenfalls durch einen geeignet gesteuerten Influenzvorgang. Dies hat den großen Vorteil, daß zur Ladungsauffrischung keine galvanisch leitende Kontaktierung der Rotorelektrode notwendig ist.

In Fig. 8 sind alle an diesem Vorgang nicht beteiligten Bauelemente weggelassen, der Rotor ist in der Position $\pi/2$ gezeichnet, an der die Auffrischung der Rotorladung erfolgt. Voraussetzung für diesen Ladevorgang ist, daß während des vorangegangenen vollen Rotorumlaufs die Kondensatoren C3 und C5 nicht entladen wurden und damit am Knotenpunkt C3/B und auch am Knotenpunkt C5/C die entsprechend obiger Herleitung generierte Ladungsmenge $Q3(\pi) = C3 * U3(\pi)$ vorhanden ist.

Die Fig. 9 stellt dies am Ersatzschaltbild dar. Aus Symmetriegründen haben $C1(\pi/2)$ und $C2(\pi/2)$ die gleiche Größe, C3 und C5 besitzen ebenfalls einen identischen Wert. Deshalb können diese Kapazitäten in der in Fig. 9 dargestellten Weise zusammengefaßt werden. Nach den üblichen Regeln der Netzwerkanalyse gilt für die Spannung U7 am Rotorkondensator C4:

$$U7(\pi/2) = \frac{Q0*(C3+C1(\pi/2)) - 2*QR*C1(\pi/2)}{C3*C4 + (C4+2*C3)*C1(\pi/2)}$$

Wäre die Diode D4 nicht vorhanden, würde die Spannung U7 dann negativ, wenn die Bedingung

$$2*QR*C1(\pi/2) = 2* Q0* \frac{C0}{C0+C4} * C1(\pi/2) > Q0* (C3+C1(\pi/2))$$

erfüllt ist. Die Kapazitäten müssen also der Bedingung $2* C0* C1(\pi/2) > (C0+C4) * (C3+C1(\pi/2))$ genügen, damit die Ladung auf der Rotorfläche A durch den beschriebenen Influenzvorgang erhöht werden kann. Die Diode D4 läßt den Zufluß von negativen Ladungen zu, bis die Ladungssummen ausgeglichen sind. Es gilt dann:

$$Q5 = Q0neu = 2* Q0* \frac{C0}{C4 + C0} * \frac{C1(\pi/2)}{C3+C1(\pi/2)}$$

Der Faktor

$$k = \frac{Q0neu}{Q0}$$

definiert dabei das Maß, um das bei jedem Regenerier-Zyklus die Summenladung Q0 angehoben wird. Im Betrieb sollten für den Faktor k Werte um 1,2 gewählt werden, damit keine zu großen Sprünge in der abgegebenen Generatorspannung auftreten. Gibt man k vor, folgt daraus eine Bestimmungsgleichung für C4, wenn C3, C0 und $C1(\pi/2)$ festliegen:

$$C4 = C0 * \left\{ \frac{2*C1(\pi/2)}{k * (C3+C1(\pi/2))} - 1 \right\}$$

Im praktischen Betrieb werden Mittel notwendig, mit denen die Rotorladung überwacht wird, damit im geeigneten Zeitpunkt ein Regenerationszyklus -wie oben beschriebeneingefügt werden kann. Dies kann durch Messung der Rotorspannung gegen Masse im Winkelbereich um 0 Grad oder $\pi$ erfolgen. Liegt diese Spannung unter einem bestimmten Grenzwert, werden für den nachfolgenden Rotor-Umlauf die Schalter S3 und S4 nicht geschlossen, S1 bzw. S2 bleiben geöffnet, solange C3 bzw. C5 geladen ist (wie weiter oben bereits dargestellt).

Eine sehr einfache erfindungsgemäße Lösung für die Steuerung der Regenerier-Zyklen ergibt sich, wenn die in Fig. 1 und Fig. 4 dargestellten Schalterfunktionen S1 und S4 durch Funkenstrecken mit definierter Zündspannung realisiert werden. Wenn ein vorgegebener Grenzwert für die weiter oben hergeleitete Generatorspannung U3($\alpha$) nicht mehr erreicht wird, weil die influenzierende Rotorladung durch Leckstrom o.ä. abgenommen hat, zünden diese Funkenstrecken nicht. C3 und C5 werden nicht entladen und der oben beschriebene Auffrisch-Vorgang für die Ladung Q0 erfolgt während des nächsten Rotorumlaufs automatisch.

## Patentansprüche

1. Elektrostatischer Generator mit mindestens einer Rotor-Elektrode (A) oder einem Rotorelektroden-System und mindestens zwei Stator-Elektroden (B,C) oder Statorelektroden-Systemen, bei dem sich die Kapazitäten zwischen Rotor-Elektrode und Stator-Elektroden bzw. zwischen Rotor-Elektrodensystem und Stator-Elektrodensystemen in Abhängigkeit vom Rotorwinkel zwischen einem Wert nahe 0 und einem Maximalwert gegenläufig zyklisch ändern, gekennzeichnet dadurch,

   A.) daß die Rotor-Elektrode (A) bzw. das Rotorelektroden-System über einen in der Regel mitrotierenden Kondensator (C4) mit der Rotorachse und dadurch mit dem gemeinsamen Massepotential der gesamten Anordnung verbunden ist.
   B.) daß die Stator-Elektroden (B,C) bzw. die Statorelektroden-Systeme über je einen Kondensator (C3,C5) mit dem gemeinsamen Massepotential der Anordnung verbunden sind.
   C.) daß die Energieentnahme an den Stator-Kondensatoren (C3,C5) bzw. den Stator-Elektroden (B,C) nur bei definierten Winkelpositionen des Rotors erfolgt, an denen sich das elektrostatische Energieniveau der Rotorelektrode bzw. des Rotorelektroden-Systems in seinem Minimum befindet und die Kapazität zwischen betreffender Stator-Elektrode bzw. betreffendem Statorelektroden-System und Rotor-Elektrode bzw. Rotorelektroden-System ebenfalls ihren minimalen Wert erreicht.
   D.) daß mittels geeigneter Schaltelemente jeweils alternierend die Stator-Kondensatoren (C3,C5) während definierter Bereiche der Rotorposition für die influenzierten Ladungen elektrisch leitend überbrückt werden.

2. Elektrostatischer Generator nach Anspruch 1, dadurch gekennzeichnet, daß über eine parallel zum Rotor-Kondensator geschaltete Diode (D4) die Regeneration der Rotor-Ladung ebenfalls durch einen Influenz-Vorgang erfolgt.

3. Elektrostatischer Generator nach Anspruch 1 und 2, dadurch gekennzeichnet, daß das Maß für die Regenerierung der Rotor-Ladung über das Verhältnis der Kapazitäten zwischen Rotor und Stator (C1, C2) sowie zwischen Stator und Massepotential (C3,C5) bzw. dem zu diesem Zweck eingeführten Rotor-Kondensator (C4) genau bestimmbar wird.

4. Elektrostatischer Generator nach Anspruch 1, dadurch gekennzeichnet, daß zum Erhalt eines permanenten Ladungs-Überschusses auf dem Rotor ein Elektret als äußerer Rotorbelag verwendet wird.

5. Elektrostatischer Generator nach Anspruch 1 und 2, dadurch gekennzeichnet, daß zur leitenden Überbrückung der Stator-Kondensatoren (C3,C5) während definierter Bereiche der Rotorposition für die influenzierten Ladungen Dioden (D3,D5) verwendet werden.

6. Elektrostatischer Generator nach Anspruch 1 und 2, dadurch gekennzeichnet, daß zur leitenden Überbrückung der Stator-Kondensatoren (C3,C5) während definierter Bereiche der Rotorposition für die influenzierten Ladungen mechanische Kommutator-Kontakte (S1, S2) verwendet werden.

7. Elektrostatischer Generator nach Anspruch 1 und 2, dadurch gekennzeichnet, daß zur leitenden Überbrückung der Stator-Kondensatoren (C3,C5) während definierter Bereiche der Rotorposition für die influenzierten Ladungen Halbleiter-Schalter (S1,S2), bevorzugt Feldeffekt-Transistoren verwendet werden.

**8.** Elektrostatischer Generator nach Anspruch 1 und 2, <u>dadurch gekennzeichnet</u>, daß zur geschalteten Leistungsentnahme an den Stator-Kondensatoren (C3,C5) bei definierten Rotorpositionen für die Schalterfunktionen (S3, S4) mechanische Kommutator-Kontakte verwendet werden.

**9.** Elektrostatischer Generator nach Anspruch 1 und 2, <u>dadurch gekennzeichnet</u>, daß zur geschalteten Leistungsentnahme an den Stator-Kondensatoren (C3,C5) bei definierten Rotorpositionen für die Schalterfunktionen (S3,S4) Halbleiter-Schalter, bevorzugt Feldeffekt-Transistoren verwendet werden.

**10.** Elektrostatischer Generator nach Anspruch 1 und 2, <u>dadurch gekennzeichnet</u>, daß zur geschalteten Leistungsentnahme an den Stator-Kondensatoren (C3,C5) bei festgelegten Rotorpositionen für die Schalterfunktionen (S3, S4) Funkenstrecken in Luft oder unter Schutzgas verwendet werden, die eine definierte, auf die Regenerier-Schwelle der Rotorladung abgestimmte Zündspannung aufweisen.

**11.** Elektrostatischer Generator nach den Ansprüchen 1 bis 10, <u>dadurch gekennzeichnet</u>, daß die Rotor- und Stator-Kapazitäten in eine größere Anzahl gleicher Segmente unterteilt sind.

**12.** Elektrostatischer Generator nach allen vorangehenden Ansprüchen, <u>dadurch gekennzeichnet</u>, daß alle Funktionseinheiten, mindestens jedoch der Rotor und die Stator-Elemente, in einem hermetisch dichten, evakuierten Gehäuse untergebracht sind und das Drehmoment für den Antrieb des Rotors mittels einer geeigneten Magnetkupplung durch das Gehäuse übertragen wird.

Fig. 1

Fig. 2

# Fig. 3

S1
S2
S3
S4

0°  180°  360°

# Fig. 4

C2(α)=Cac(α)    C1(α)=Cab(α)

Fig. 5

Fig. 6

Fig. 7

C   A

B

D4   C4

α

C5   C3

Fig. 8

(Rotor-Elektrode)

U5   -Q5   2C1($\frac{\pi}{2}$)
Q5

U6   Q6   2C3
-Q6

D4

U7   -Q7   C4
Q7

Q5+Q6=2*C3*U3($\pi$)

Fig. 9